# EUROPEAN PATENT APPLICATION

(11) **EP 1 376 810 A1**
(43) Date of publication of application: **02.01.2004**
(21) Application number: 02014415.0
(22) Date of filing: 28.06.2002
(51) Int. Cl.: H02H 7/08

(54) **Fault sensing circuit for simple motor control**

(71) Applicant: Thomson Licensing S.A., 92648 Boulogne Cedex (FR)
(72) Inventor: Li, Chun Fat, Singapore 529861 (SG); Chin, Yuan Fuat, Singapore 679645 (SG)
(74) Representative: Rossmanith, Manfred, Dr.

(57) **Abstract**

In a ventilating fan (1), power consumption of the driving motor (M) is utilized to detect operating condition and fault condition. By means of a sensing resistor (R1) and a fault sensing circuit (2) the power consumption is measured and converted into a two logical level information. The logical level information is coded in a two bit code (00, 10) for a system µP (4) to control power supply of the motor (M) and the device to be cooled by the ventilating fan (1).

## Description

### BACKGROUND OF THE INVENTION

The present invention is based on controlling d.c. motors and relates to an electronic circuitry for monitoring operational condition and/or fault condition of a device driven by the motor.

Malfunction of the motor or the device like a ventilating fan including the motor for cooling another device like a power consuming integrated circuit within a personal computer, for example, due to normal wear and tear or manufacturing failure may heat up the device to be cooled to a temperature which is beyond its operating limits. Ultimately, the device will fail leading to costly repairs or to fire hazard in the worst case.

From such ventilating fans, usually using motors of a three pins type according to which a third pin outputs a corresponding motor rotation signal rpm, it is known to detect failures of the ventilating fans by evaluating the motor rotation signal rpm. The solution has a general structure as represented by FIG. 3. As represented by block 30, the signal rpm from the third pin is fed to a so-called system microprocessor, which is represented by block 31 to control and to detect via a motor sensor whether the fan is turning and to interpret the rpm signal usual being a train of pulses.

### SUMMARY OF THE INVENTION

A ventilating fan, however, using a motor according to the three pins type is relatively expensive. The present invention therefore aims at using driving means being significantly cheaper.

The invention is based on the idea to employ a d.c. motor of a two pins type for a ventilating fan, and to utilize the power consumption of such a type of motor - which, in principle, has terminals only for supplying the motor with power - as an indication for operational condition and fault condition of the ventilating fan.

The invention has the benefit that different conditions can be interpreted from the power consumption since normal operation of the motor and failures due to jamming of the fan, interruption or short-circuit within the motor for example are affecting the power consumption of the motor in different way. And a corresponding transition range between operational condition and fault condition may be used for warning indication.

### BRIEF DESCRIPTION OF THE DRAWINGS

The foregoing and further features of the invention are illustrated in the accompanying drawings wherein like elements are denoted by like reference designators, and the invention will be described with reference to accompanying drawings, in which:
- FIG. 1: is a simplifying block diagram of a circuitry for monitoring a ventilating fan according to the present invention;
- FIG. 2: is a schematic diagram partially in block form showing details of the circuitry according to FIG. 1; and
- FIG. 3: is a simplifying block diagram of a circuitry for monitoring a ventilating fan according to state of the art.

### DESCRIPTION OF THE PREFERED EMBODIMENT

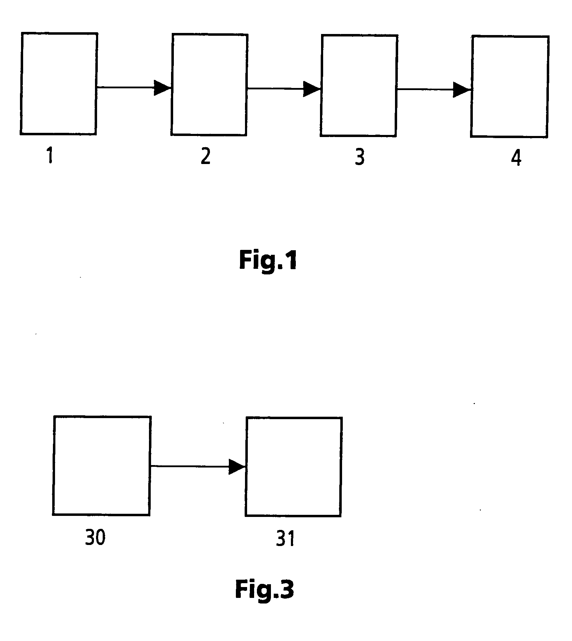

Referring now to FIG. 1, there is shown the principle for monitoring a ventilating fan 1 which is represented by block 1 and in which a d.c. motor of the two pins type is used as driving motor M.

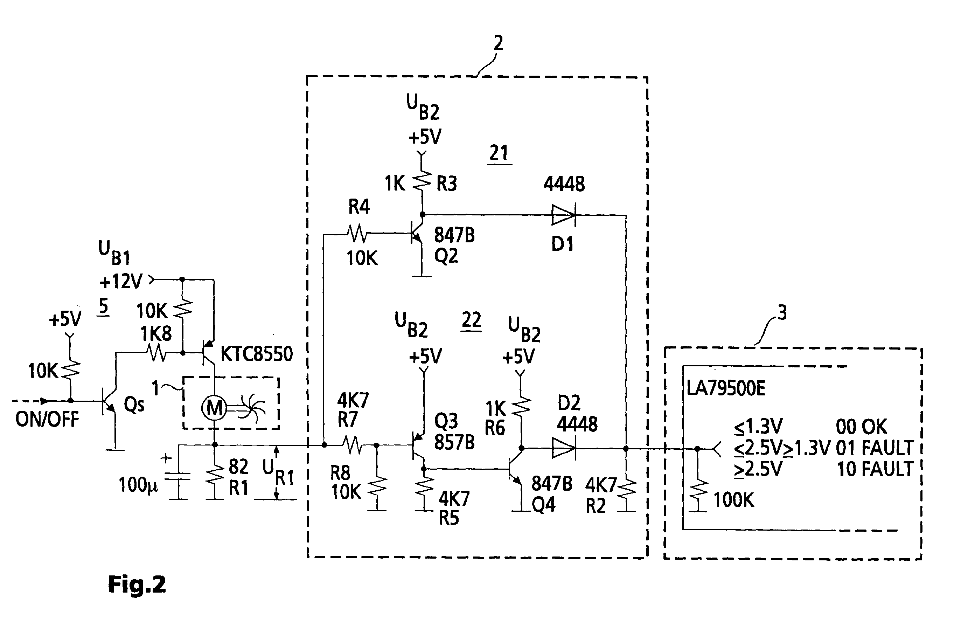

As shown in Fig. 2, a sensing resistor R1 is arranged in series with the two pins type motor M and a controllable switch 5 between reference potential (ground) and the positive potential of a first operating voltage U_{B1}.

The switch 5 is constituted by the collector-emitter path of a transistor Q1 of the pnp type which is controlled via a transistor Qs of the npn type by a system µP 4 which is represented by block 4.

The sensing resistor R1 has two purposes: First, the value of this resistor R1 determines the speed of the motor M and thus of the ventilating fan 1. Second, the voltage U_{R1} across this resistor R1 is an indication for the status of the ventilating fan 1.

As represented by block 2, the voltage across the sensing resistor R1 is connected to a fault sensing circuit 2. The sensing circuit 2 which is basically an OR circuit converts analog voltages U_{R1} across the sensing resistor R1 preferably into two logical level information between 0 and 5 Volt in accordance with the usual operating voltage for digital circuits. Then, by means of a level detector, represented by block 3, the respective logical level information fed from the output of sensing circuit 2 is converted into a two bit code for the system µP 4 to control power supply of the motor M and the device, not shown, to be cooled by the ventilating fan 1.

In practice where for example an integrated circuit, called IC in the following, of type LA79500E from Sanyo is already used, benefit can be taken from a three levels detector being inside this IC. The input is on pin 66 of this IC, and two registers within this IC will reflect the voltage level on this pin. For example, if the voltage level fed to this pin is 1.3 Volt or less the binary data will be 00, if the voltage level is 1.3 Volt or more to 2.5 Volt or less the data of the registers will be 01, and if the voltage level is 2.5 Volt or more the data of the registers will be 10.

In the preferred embodiment of the invention there is made use of this IC type LA79500E whereby pin 66 is connected with the output of the sensing circuit 2.

The sensing circuit 2 comprises a first signal path 21 and a second signal path 22 arranged in parallel to each other and used as converting means to convert analog voltages U_{R1} across the sensing resistor R1 into two logical level information between 0 and 5 Volt in accordance with the usual operating voltage for digital circuits.

The first signal path 21 is constituted by a transistor amplifier and a diode which in the following being called first transistor amplifier and first diode D1, respectively. The first transistor amplifier is constituted by a transistor Q2 of the npn type. The collector-emitter path of this transistor Q2 is connected with reference potential and via a collector resistor R3 with the positive potential of a second operating voltage U_{B2}. The base of this transistor Q2 is connected via a resistor R4 with the input of the sensing circuit 2 to receive the voltage variations across the sensing resistor R1 whereas the collector, constituting the output of the first transistor amplifier, is connected via the first diode D1 with a resistor R2 constituting the output resistor of the sensing circuit 2 and being in common for both the first and the second signal path 21, 22. First diode D1 is arranged in such a way that it becomes conductive when the voltage at the collector of transistor Q2 exceeds the threshold voltage of the diode D1.

The second signal path 22 is constituted by a transistor amplifier and a diode which in the following being called second transistor amplifier and second diode D2, respectively. The second transistor amplifier is constituted by a first transistor Q3 of the pnp type and by a second transistor Q4 which, in contrast to the first transistor Q3, is a npn type. The collector-emitter path of the first transistor Q3 is connected with the positive potential of the second operating voltage U_{B2} and via collector resistor R5 with the reference potential. The collector-emitter path of the second transistor Q4 is connected with reference potential and via collector resistor R6 with the positive potential of the second operating voltage U_{B2}. The base of the first transistor Q3 is connected via a potential dividing means, constituted by means of two resistors R7 and R8, with the sensing resistor R1 to receive the voltage variations across the sensing resistor R1 whereas the base of the second transistor Q4 is connected with the collector of the first transistor Q3 so that the second diode D2 becomes conductive when the voltage at the collector of the second transistor Q4, constituting the output of the second transistor amplifier, exceeds the threshold voltage of the second diode D2.

### The sensing circuit 3 operates as follows:

During normal operation, the voltage U_{R1} across sensing resistor R1 is about 2V. In this case the transistor Q2 of the first signal path 21 as well as the transistors Q3 and Q4 of the second signal path 22 are turned ON so that the diodes D1 and D2 are non-conductive. Hence, the output voltage of the sensing circuit 2 is practical 0 Volt. This voltage level corresponds to the normal operating condition of the ventilating fan 1 and the logical level information logical "L". In the IC LA79500E it will be converted into the two bit code 00 and stored in a pair of registers (not shown).

In case of fault conditions, the following might happen:
a) The ventilating fan 1 is missing, due to that the motor M is not properly connected, for example. In this case the voltage U_{R1} across the sensing resistor R1 is at 0 Volt. Transistors Q3 and Q4 of the second signal path 22 are turned ON so that second diode D2 is non-conductive. On the other hand, transistor Q2 in the first signal path 21 is turned OFF so that voltage at the collector of this transistor Q2 is shifted towards the positive potential of second operating voltage U_{B2} what turns first diode D1 into the conductive state. And due to the value of collector resistor R3, the value of output resistor R2 and the forward voltage of the first diode D1, the output voltage of the sensing circuit 2 is about 4.4 Volt. This voltage level corresponds to a fault condition of the ventilating fan 1, and the logical level information in this case is logical "H" . The IC LA79500E converts it into the two bit code 10.
b) The ventilating fan 1 does not run due an interruption in the motor M. In this case, no current will flow through the motor windings and the voltage U_{R1} across the sensing resistor R1 is 0 Volt, too. The same is happened as above in a).
c) The ventilating fan 1 is shorted due to malfunction. In this case the voltage U_{R1} across the sensing resistor R1 is 12 Volt. Transistor Q2 of the first signal path 21 is turned ON so that the first diode D1 is non-conductive. On the other hand, transistors Q3 and Q4 in the second signal path 22 are turned OFF so that voltage at the collector of second transistor Q4 is shifted towards the positive potential of second operating voltage U_{B2} what turns second diode D2 into the conductive state. And due to the value of its collector resistor R6, the value of output resistor R2 and the forward voltage of the second diode D2, the output voltage of the sensing circuit 2 is again about 4.4 Volt corresponding to the fault condition of the ventilating fan 1, and the logical level information in this case is also logical "H" which is converted into the two bit code 10 in IC LA79500E.

In conclusion, if the logical level information is logical "L" everything is fine. But if the logical level information is logical "H" a fault condition will be signified. In other words: If the voltage U_{R1} across the sensing resistor R1 falls below the value of about 2 Volt, the fault condition is signified by means of the first signal path 21; and if the voltage U_{R1} across the sensing resistor R1 exceeds the value of about 2 Volt, the fault condition is signified by means of the second signal path 22.

Hence, the first signal path 21 and the second signal path 22 together constituting an OR circuit by means of which analog voltages U_{R1} across the sensing resistor R1 are converted into two logical level information.

Application of the invention is not restricted to ventilating fans. The invention can also be applied to other devices which are driven by motors being cheaper than three pin type d.c. motors.

## Claims

1. Electronically circuit for monitoring operational condition of a device (1) being driven by a motor (M),
**characterized by**
a sensing resistor (R1) arranged in series with the motor (M) and an electronic switch (5) between reference potential and a first operating voltage (U_{B2}) to indicate operational condition and fault condition of the device (1) by corresponding voltage variations (ΔU_{R1}) across the sensing resistor (R1); and
a first signal path (21) and a second signal path (22) which are constituted by converting means to convert the voltage variations (ΔU_{R1}) across the sensing resistor (R1) into logical level information, each having a signal input connected with the sensing resistor (R1) to receive said voltage variations (ΔU_{R1}) and a signal output being connected with an input of a level detector (3) which is provided to code the logical level information, resulting from fault or operating conditions of the device (1), into a bit code (00, 10).

2. The electronically circuit according to claim 1, **characterized by** that the first signal path (21) and the second signal path (22) have an output resistor (R2) in common.

3. The electronically circuit according to claim 2, **characterized by** that the first signal path (21) is constituted by a first transistor amplifier and a first diode (D1), the input of this transistor amplifier is connected with the sensing resistor (R1) to receive the voltage variations (ΔU_{R1}) across the sensing resistor (R1) whereas the output of this transistor amplifier is connected via the first diode (D1) with the output resistor (R2).

4. The electronically circuit according to claim 2, **characterized by** that the second signal path (22) is constituted by a second transistor amplifier and a second diode (D2), the input of this transistor amplifier is connected with the sensing resistor (R1) to receive the voltage variations (ΔU_{R1}) across the sensing resistor (R1) whereas the output of this transistor amplifier is connected via the second diode (D2) with the output resistor (R2).

5. The electronically circuit according to claim 3, **characterized by** that the first transistor amplifier is constituted by a transistor (Q2), the base of this transistor (Q2) is connected with the sensing resistor (R1) to receive the voltage variations (ΔU_{R1}) across the sensing resistor (), the collector-emitter path of this transistor (Q2) is arranged between reference potential and a second operating voltage (U_{B2})) via a collector resistor (R3) by means of which the first diode (D1) becomes conductive when the collector voltage of this transistor (Q2) exceeds threshold voltage of the first diode (D1) .

6. The electronically circuit according to claim 4, **characterized by** that the second transistor amplifier is formed by a first transistor (Q3) and a second transistor (Q4) being of different type, the collector-emitter path of each transistor is arranged via a collector-resistor (R5; R6) between reference potential and the second operating voltage (U_{B2}), the base of the first transistor (Q3) is connected via potential dividing means (R7, R8) with the sensing resistor (R1) to receive said voltage variations (ΔU_{R1}) across the sensing resistor (R1) whereas the base of the second transistor (Q4) is connected with the collector of the first transistor (Q3) so that the second diode (D2) becomes conductive when the collector voltage of the second transistor (Q4) exceeds the threshold voltage of the second diode (D2).

7. The electronically circuit according to claim 5, **characterized by** that the collector voltage of the transistor (Q2) exceeds the threshold voltage of the first diode (D1) when the fault condition of the device (1) is caused by a failure which corresponds to an interruption caused by the motor (M).

8. The electronically circuit according to claim 6, **characterized by** that the collector voltage of the second transistor (Q4) exceeds the threshold voltage of the second diode (D2) when the fault condition of the (1) is caused by a failure which corresponds to a short circuit caused by the motor (M).

9. The electronically circuit according to claims 5 and 6, **characterized by** that during operational condition of the device (1) the collector voltage of the transistor (Q2) of first transistor amplifier and the collector voltage of the second transistor (Q4) of the second transistor amplifier do not exceed the threshold voltage of the first diode (D1) and of the second diode (D2), respectively.

10. The electronically circuit according to claims 6-9, **characterized by** that a transition range between the operational condition and the fault conditions according to the interruption or the short circuit caused by the motor (M) is used to indicate a warning condition.

11. The electronically circuit according to claim 1, **characterized by** that the sensing resistor (R1) determines the speed of the motor (M) and the voltage (U_{R1}) across this resistor is an indication of the status of the device (1) driven by the motor (M).
